# EUROPEAN PATENT APPLICATION

(11) **EP 0 636 576 A1**
(43) Date of publication of application: **01.02.1995**
(21) Application number: 94401451.3
(22) Date of filing: 27.06.1994
(51) Int. Cl.: C01B 21/22, F25J 3/08

(54) **Ultra-high purity nitrous oxide producing method and unit**

(30) Priority: 26.07.1993 JP 184163/93
(71) Applicant: TEISAN KABUSHIKI KAISHA, Minato-ku Tokyo 105 (JP)
(72) Inventor: Nagamura, Takashi, Harima-cho, Kako-gun, Hyogo-ken (JP)
(74) Representative: Mercey, Fiona Susan

(57) **Abstract**

The present invention is intended to provide a nitrous oxide producing method and unit which can produce nitrous oxide of ultra-high purity at a higher recovery.

According to the present invention, a feed gas (2) comprising nitrous oxide and containing nitrogen, oxygen and water in a saturated state as impurities is compressed by compressor (4) and water in the compressed feed gas is removed by a drier (8), and then the feed gas is cooled down in a main heat exchanger (12) so as to form mixed gas-liquid nitrous oxide. Then, this mixed gas-liquid nitrous oxide is introduced into a rectification column (16), where it is rectified and separated through gas-liquid contact therein so that high purity liquefied nitrous oxide is reservoired in the bottom thereof. Nitrogen and oxygen in the high purity liquefied nitrous oxide are evaporated and stripped off by means of a boiler (18) making use of the mixed gas-liquid nitrous oxide as a heat source, whereby it can be purified to ultra-high purity liquefied nitrous oxide.

## Description

The present invention relates to a method and a unit for producing nitrous oxide (N₂O) of ultra-high purity.

Nitrous oxide is used for surgical anaesthesia and detection of fluid leakage, and further used for manufacture of electronic parts.

A method for producing nitrous oxide of high purity is known which comprises reacting ammonia and oxygen to prepare a feed gas (raw gas), compressing this feed gas and subjecting the compressed feed air to a high-pressure water washing, and further compressing the water-washed feed gas and drying the compressed feed gas, and thereafter liquefying the compressed and dried feed gas and taking out the liquefied gas as a product (see : "11, 290 Chemical Products" published by Kagaku Kogyo Nipposha).

In the aforementioned nitrous oxide producing method of the prior art, however, the purity of nitrous oxide which can be produced is only as high as 97 ∼ 98% and it has been impossible to produce ultra-high purity nitrous oxide having a purity of 99.999% or more that is required in the field of manufacture of electronic parts in the recent years.

Also in this method of the prior art, the recovery of nitrous oxide from the feed gas is as low as 80 ∼ 90% and a higher recovery thereof is required.

It is therefore an object of the present invention to provide a nitrous oxide producing method and unit which can produce nitrous oxide of ultra-high purity at a higher recovery.

In order to achieve the aforementioned purpose, the ultra-high purity nitrous oxide producing method according to the invention of claim 1 is characterised by comprising compressing a nitrous oxide feed gas containing nitrogen, oxygen and water in a saturated state as impurities removing water in the compressed feed gas and cooling down the compressed feed gas so that it is turned to gas-liquid mixed nitrous oxide ; then rectifying and separating the mixed gas-liquid nitrous oxide through gas-liquid contact in a rectification column so that it is turned to high purity liquefied nitrous oxide ; and further evaporating and stripping off nitrogen and oxygen in the high purity liquefied nitrous oxide by means of an evaporator, thereby purifying it to ultra-high purity liquefied nitrous oxide.

The ultra-high purity nitrous oxide producing unit for carrying out the aforementioned ultra-high purity nitrous oxide producing method is characterised, as set forth in claim 2, by comprising : a compressor for compressing a nitrous oxide feed gas containing nitrogen, oxygen and water in a saturated state as impurities ; a drier for removing water in the feed gas compressed by said compressor ; a main heat exchanger for cooling down the feed gas coming out of said drier as that it is turned to mixed gas-liquid nitrous oxide ; a rectification column for rectifying and separating the mixed gas-liquid nitrous oxide coming out of said main heat exchanger through gas-liquid contact therein so that a gas consisting of nitrogen gas and oxygen gas as main components is sent to the top portion thereof and high purity liquefied nitrous oxide is reservoired in the bottom portion thereof ; a condenser disposed in said rectification column, for liquefying evaporated nitrous oxide contained in the gas ascending in the rectification column, and causing the liquefied nitrous oxide to flow down therein ; and evaporator disposed in the bottom portion of the rectification column and making use of the mixed gas-liquid nitrous oxide coming out of the main heat exchanger as a heat source, for evaporating and stripping off nitrogen and oxygen in the high purity liquefied nitrous oxide reservoired in the bottom portion of the rectification column, thereby purifying it to ultra-high purity liquefied nitrous oxide ; and a means for taking out the purified ultra-high liquefied nitrous oxide in the bottom portion of the rectification column from the same rectification column.

The rectification column has a lower rectifying portion and an upper rectifying portion, and the condenser includes a first condenser disposed between said lower rectifying portion and said upper rectifying portion and a second condenser disposed above the upper rectifying portion, wherein the mixed gas-liquid nitrous oxide passed through the evaporator is introduced between the lower rectifying portion and said first condenser through a conduit.

It is preferred that a part of the ultra-high purity liquefied nitrous oxide taken out of the rectification column is used as a cold source for said second condenser, and the ultra-high purity evaporated nitrous oxide which has been used and evaporated in the second condenser is used as a cold source for said main heat exchanger.

It may be further modified that the gas consisting of nitrogen gas and oxygen gas as the main components, which has reached the top portion of said rectification column, is taken out of the rectification column, and this gas is used as a cold source for the main heat exchanger.

According to the aforementioned ultra-high purity nitrous oxide producing method and unit, it is possible to reliably remove nitrogen and oxygen whose boiling points are lower than that of nitrous oxide from a feed gas (mixed gas-liquid nitrous oxide), and to produce ultra-high purity liquefied nitrous oxide at a higher recovery because the rectification of the feed gas is carried out through the gas-liquid contact.

Now referring to the accompanying drawing, the preferred embodiments of the present invention will be described in detail.

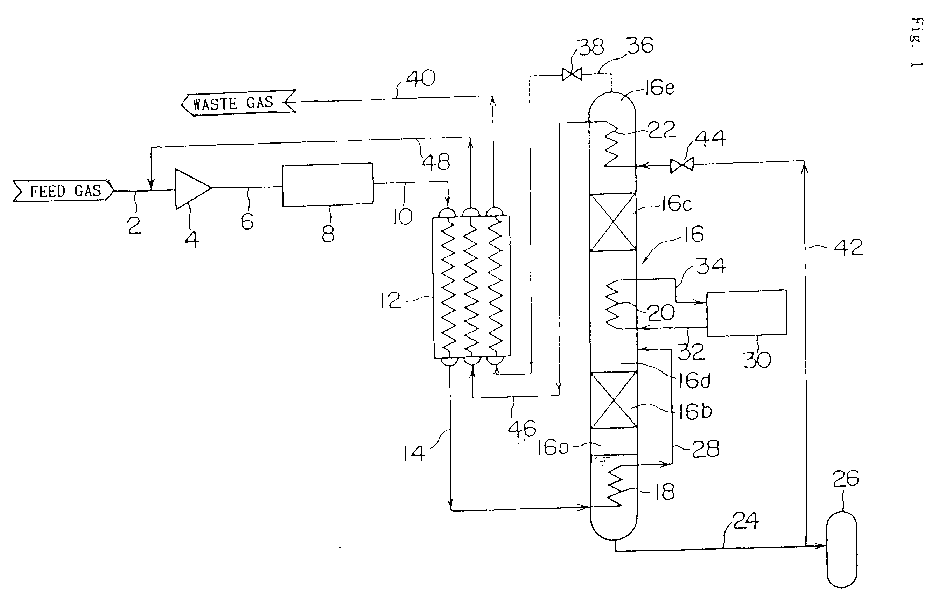

Fig.1 is a flow diagram showing one embodiment of the ultra-high purity nitrous oxide producing unit which is capable of carrying out the ultra-high purity nitrous oxide producing method according to the present invention. This ultra-high purity nitrous oxide producing unit makes use of a feed gas comprising 96% of nitrous oxide (N₂O), 3% of nitrogen (N₂), 1% of oxygen (O₂) and the balance of water (H₂O) in a saturated state. As illustrated here, the feed gas is introduced, for instance, at a temperature of about 10 °C and a pressure of about 0.1kg/cm²G, from a conduit 2 to a compressor 4, where it is compressed to a pressure necessary for its rectification and separation, for example, to a pressure of about 20 kg/cm²G. The compressed feed gas is introduced to a drier 8 through a conduit 6, where moisture is adsorbed therefrom.

The feed gas freed of moisture is then introduced to a main heat exchanger 12 by way of a conduit 10, where it is cooled down through heat exchange with waste gas having a temperature of about -85°C and recycle gas having a temperature of about -85°C, which will be hereinafter mentioned, so as to be turned to mixed gas-liquid nitrous oxide having a temperature of about -20 °C and a pressure of about 20kg/cm²G. This mixed gas-liquid nitrous oxide is introduced to an evaporator 18 provided in a lower space 16a of a rectification column 16 through a conduit 14.

The construction of the rectification column 16 will be described here in brief. In the inside of the rectification column 16 are provided a lower rectifying portion 16b and an upper rectifying portion 16c, each comprising many stages of rectifying trays, and in a space (which will be hereinafter called an intermediate space) 16d between the lower rectifying portion 16b and the upper rectifying portion 16c is provided a condenser (which will be hereinafter called a first condenser) 20. Also in an upper space 16e located above the upper rectifying portion 16c is provided a condenser (which will herein-after called a second condenser) 22, and in the lower space 16a located under the lower rectifying portion 16b is provided the evaporator 18, as mentioned above.

The mixed gas-liquid nitrous introduced in the evaporated 18 in the rectification column 16 constructed as mentioned above heats high purity liquefied nitrous oxide reservoired in the bottom portion of the rectification column 16 so that nitrogen and oxygen dissolved in the high purity liquefied nitrous oxide are evaporated and stripped off. As a result, the high purity liquefied nitrous oxide is turned to ultra-high purity liquefied nitrous oxide having a purity of 99.9998% or more, and this ultra-high purity liquefied nitrous oxide is taken out of the bottom portion of the rectification column 16 through a conduit 24 and stored in a storage tank 26 as a product. On the other hand, the nitrogen and oxygen stripped out of the high purity liquefied nitrous oxide ascend together with the evaporated nitrous oxide in the lower rectifying portion 16b.

After the mixed gas-liquid nitrous oxide which flows through the evaporator 18 is cooled down by the high purity liquefied nitrous oxide reservoired in the bottom portion of the rectification column 16, it is introduced between the first condenser 20 in the intermediate space 16d and the lower rectifying portion 16b through a conduit 28. The liquid phase part of the introduced mixed gas-liquid nitrous oxide flows down in the lower rectifying portion 16b so as to be brought into gas-liquid contact with the gas ascending in the lower rectifying portion 16b in a countercurrent situation. As a result, the concentrations of nitrogen and oxygen in the ascending gas increase as it ascends in the lower rectifying portion 16b, while the liquid phase nitrous oxide which flows down there increases in purity to from liquefied nitrous oxide of high purity and is reservoired in the bottom portion of the rectification column 16.

On the other hand, the gas phase part of the mixed gas-liquid nitrous oxide introduced in the intermediate space 16d ascends together with the gas ascending from the lower rectifying portion 16b in the intermediate space 16d so as to be cooled down by means of the first condenser 20 so that a part thereof is condensed and liquefied, and this liquefied nitrous oxide is caused to flow down to the lower rectifying portion 16b as a reflux liquid. The remaining gas part is further ascending to the upper rectifying portion 16c. In addition, the first condenser 20 in this intermediate space 16d is supplied with a refrigerant having a temperature of about -25°C which is sent from a refrigerator 30 disposed outside of the rectification column 16 through a conduit 32 as a cold source, and the refrigerant flowing out of the first condenser 20 will be returned to the refrigerator 30 through a conduit 34.

The ascending gas in the upper rectifying portion 16c is brought in gas-liquid contact with the reflux liquid from the upper space 16e in a countercurrent situation so as to be further increased in the concentrations of nitrogen and oxygen, and then it reaches the upper space 16e. The evaporated nitrous oxide remaining in this gas is liquefied by means of the second condenser 22 disposed in the upper space 16e and the liquefied nitrous oxide is caused to flow down in the upper rectifying portion 16c as a reflux liquid. This reflux liquid catches up evaporated nitrous oxide in the ascending gas so as to be increased in its nitrous oxide purity, as flowing down in the upper rectifying portion 16c. After the reflux liquid passes through the upper rectifying portion 16c, it caused to flow in the lower rectifying portion 16b so as to be turned to high purity liquefied nitrous oxide, and this high purity liquefied nitrous oxide is reservoired in the bottom portion of the rectification column 16.

Thus, the feed gas comprising nitrous oxide and containing small amounts of nitrogen and oxygen is rectified and separated to the liquefied nitrous oxide of high purity and the gas consisting of about 70% of nitrogen, about 22% of oxygen and about 8% of nitrous oxide (which will hereinafter called a waste gas), in accordance with the principle of rectification through gas-liquid contact in the rectification column 16. The former high purity liquefied nitrous oxide is reservoired in the column bottom portion and the latter waste gas is collected in the column top portion.

The high purity liquefied nitrous oxide reservoired in the bottom portion of the rectification column 16 is heated by the mixed gas-liquid nitrous oxide in the evaporator 18, as mentioned above, so that very small amounts of nitrogen and oxygen remaining therein are stripped off, and then it is taken out of the rectification column 16 as ultra-high purity liquefied nitrous oxide. Assuming that the quantity of the feed gas supplied to the compressor 4 through the conduit 2 is 100 Nm³/h, the quantity of the ultra-high purity liquefied nitrous oxide which can be taken out of the rectification column 16 is 99 Nm³/h or more. Namely, the recovery of nitrous oxide in the ultra-high purity nitrous oxide producing unit according to the present invention shown in Fig. 1 is 99% or more, and it can be seen that this recovery is remarkably improved, as compared with the method of the prior art having a recovery as high as 80 ∼ 90%.

On the other hand, the waste gas in the top portion of the rectification column 16 is taken out through a conduit 36 in such a condition that the temperature is about -80 °C and the pressure is about 19 kg/cm³G, and expanded freely to a pressure of about 0.3 kg/cm²G by means of an expansion valve 38 in the conduit 36 so that its temperature is further reduced to -85°C. Then, the waste gas is introduced to the main heat exchanger 12. Within the main heat exchanger 12, the waste gas is exchanged in heat with the feed gas already introduced therein through the conduit 10, and it is thereafter released to the atmosphere through a conduit 40 at a temperature of about 10°C and a pressure of about 0.1 kg/cm²G.

In this aforementioned embodiment, the ultra-high purity liquefied nitrous oxide taken out of the bottom portion of the rectification column 16 is used as a cold source for the second condenser 22. In concrete terms, it is designed that a part (for instance about 15%) of the ultra-high purity liquefied nitrous oxide taken out of the bottom portion of the rectification column 16 through the conduit 24 at a temperature of about -20°C and a pressure of about 19.5 kg/cm²G is introduced into the second condenser 22 through a branch pipe 42 connected with the way of the conduit 24. The branch pipe 42 has an expansion valve 44 provided therein, and the ultra-high purity liquefied nitrous of this expansion valve 44 so that its temperature is reduced to about -85°C, and it is introduced into the second condenser 22 in such a condition. The ultra-high purity evaporated nitrous oxide which has been used in the second condenser 22 is introduced to the main heat exchanger 12 by way of a conduit 46, where it is exchanged in heat, together with the said waste gas, with the feed gas, and then it is joined with the feed gas in the conduit 2 upstream of the compressor 4 through a conduit 48 as a recycle gas having a temperature of about 10°C and a pressure of about 0.10 kg/cm²G. The resulting gas will be rectified again.

According to the present invention, it is possible to produce ultra-high purity nitrous oxide having a purity of about 99.9998% and to improve the recovery of nitrous oxide remarkably, as compared with the method of the prior art, because a feed gas is rectified by use of a rectification column to produce nitrous oxide, as mentioned above.

## Claims

1. An ultra-high purity nitrous oxide producing method which comprises : compressing a nitrous oxide feed gas containing nitrogen, oxygen and water in a saturated state as impurities ; removing water in the compressed feed gas and cooling down the compressed feed gas so that it is turned to mixed gas-liquid nitrous oxide ; then rectifying and separating the mixed gas-liquid nitrous oxide through gas-liquid contact in a rectification column so that it is turned to high purity liquefied nitrous oxide in the high purity liquefied nitrous oxide by means of an evaporator, thereby purifying it to ultra-high purity liquefied nitrous oxide.

2. An ultra-high purity nitrous oxide producing unit, which comprises : a compressor for compressing a nitrous oxide feed gas containing nitrogen, oxygen and water in a saturated state as impurities ; a drier for removing water in the feed gas compressed by said compressor ; a main heat exchanger for cooling down the feed gas coming out of said drier so that it is turned to mixed gas-liquid nitrous oxide ; a rectification column for rectifying and separating the mixed gas-liquid nitrous oxide coming out of said main heat exchanger through gas-liquid contact therein so that a gas consisting of nitrogen gas and oxygen gas as main components is sent to the top portion thereof and high purity liquefied nitrous oxide is reservoired in the bottom portion thereof ; a condenser disposed in said rectification column, for liquefying evaporated nitrous oxide contained in the gas ascending in the rectification column, and causing the liquefied nitrous oxide to flow down therein ; an evaporator disposed in the bottom portion of the rectification column and making use of the mixed gas-liquid nitrous oxide coming out of the main heat exchanger as a heat source, for evaporating and stripping off nitrogen and oxygen in the high purity liquefied nitrous oxide reservoired in the bottom portion of the rectification column, thereby purifying it to ultra-high purity liquefied nitrous oxide ; and means for removing the purified ultra-high purity liquefied nitrous oxide in the bottom portion of the rectification column from the same rectification column.

3. A unit, as set forth in claim 2, in which the rectification column has a lower rectifying portion and an upper rectifying portion, and the condenser includes a first condenser disposed between said lower rectifying portion and said upper rectifying portion and a second condenser disposed above the upper rectifying portion, wherein the mixed gas-liquid nitrous oxide passed through the evaporated is introduced between the lower rectifying portion and said first condenser through a conduit.

4. A unit, as set forth in claim 3, in which part of the ultra-high purity liquefied nitrous oxide taken out of the rectification column is used as a cold source for said second condenser, and the ultra-high purity evaporated nitrous oxide which has been used and evaporated in the second condenser is used as a cold source for said main heat exchanger.

5. A unit, as set forth in anyone of claims 2, 3 or 4, in which the gas consisting of nitrogen gas and oxygen gas as the main components, which has reached the top portion of said rectification column, is taken out of the rectification column, and this gas is used as a cold source for the main heat exchanger.
